# FASCICULE DE BREVET EUROPEEN

(11) **EP 4 286 926 B1**
(45) Date de publication et mention de la délivrance du brevet: **31.12.2025**
(21) Numéro de dépôt: 23176231.1
(22) Date de dépôt: 30.05.2023
(51) Int. Cl.: G02F 1/025, H01L 21/02

(54) **PROCÉDÉ DE FABRICATION D'UNE PUCE PHOTONIQUE**
VERFAHREN ZUR HERSTELLUNG EINES PHOTONISCHEN CHIPS
METHOD FOR MANUFACTURING A PHOTONIC CHIP

(30) Priorité: 01.06.2022 FR 2205261
(43) Date de publication de la demande: 06.12.2023
(73) Titulaire: Commissariat à l'Energie Atomique et aux Energies Alternatives, 75015 Paris (FR)
(72) Inventeur: SZELAG, Bertrand, 38054 Grenoble cedex 09 (FR); HASSAN, Karim, 38054 Grenoble cedex 09 (FR)
(74) Mandataire: INNOV-GROUP

(56) Documents cités:
- EP-A1- 3 264 541
- US-A1- 2007 200 144
- US-A1- 2017 237 229
- US-A1- 2018 323 575
- US-B1- 8 358 897

## Description

L'invention concerne un procédé de fabrication d'une puce photonique ainsi qu'une puce photonique fabriquée par ce procédé.

Les puces photoniques comportent souvent des parties de composants optiques qui sont couplées optiquement ou capacitivement l'une à l'autre à travers une fine couche de matériau diélectrique également appelée dans ce texte «fine couche diélectrique ». L'épaisseur de cette fine couche diélectrique est inférieure à l'épaisseur de la couche enterrée d'oxyde de silicium des substrats SOI (« Silicone One Insulator ») standards. Ainsi, pour fabriquer une telle puce photonique à partir d'un substrat SOI standard, il a été proposé d'obtenir la fine couche diélectrique par amincissement de la couche enterrée d'un substrat SOI standard. Un tel procédé de fabrication est par exemple divulgué dans la demande US20170237229. Ce procédé est avantageux en ce qu'il utilise des substrats SOI standards et donc en ce qu'il peut être facilement mis en œuvre.

Toutefois, lorsque la fine couche diélectrique est obtenue par amincissement de la couche enterrée d'un substrat SOI standard, la précision sur l'épaisseur de la fine couche diélectrique est faible. Or, une erreur sur l'épaisseur de cette fine couche diélectrique modifie le couplage entre les deux parties de composants optiques et donc les performances de la puce photonique fabriquée.

De l'état de la technique est également connu de: US2018323575, US2017237229, US20118323575A1, US8358897B1, EP3264541A1 et US2007200144A1.

Il est donc souhaitable de proposer un procédé de fabrication d'une telle puce photonique qui permet l'utilisation d'un substrat SOI standard, tout en améliorant la précision sur l'épaisseur de la fine couche diélectrique.

L'invention a donc pour objet un tel procédé de fabrication conforme à la revendication 1.

L'invention a également pour objet une puce photonique fabriquée par le procédé de fabrication ci-dessus.

L'invention sera mieux comprise à la lecture de la description qui va suivre, donnée uniquement à titre d'exemple non limitatif et faite en se référant aux dessins sur lesquels :
- la figure 1 est illustration schématique et partielle, en coupe verticale, d'une puce photonique comportant des parties de composants optiques couplées entre elles à travers une fine couche diélectrique ;
- la figure 2 est un organigramme d'un procédé de fabrication de la puce photonique de la figure 1 ;
- les figures 3 à 11 sont des illustrations schématiques partielles et en coupe verticale de différents états de fabrication rencontrés lors de la mise en œuvre du procédé de la figure 2 ;
- la figure 12 est un organigramme d'une première variante du procédé de fabrication de la figure 2 ;
- la figure 13 est une illustration schématique et partielle, en coupe verticale, d'un état de fabrication obtenu en mettant en œuvre le procédé de la figure 12 ;
- la figure 14 est un organigramme d'une seconde variante du procédé de fabrication de la figure 2 ;
- les figures 15 à 17 sont des illustrations schématiques et partielles, en coupe verticale, de différents états de fabrication obtenus en mettant en œuvre le procédé de la figure 14.

Dans ces figures, les mêmes références sont utilisées pour désigner les mêmes éléments.

Dans la suite de cette description, les caractéristiques et fonctions bien connues de l'homme du métier ne sont pas décrites en détail.

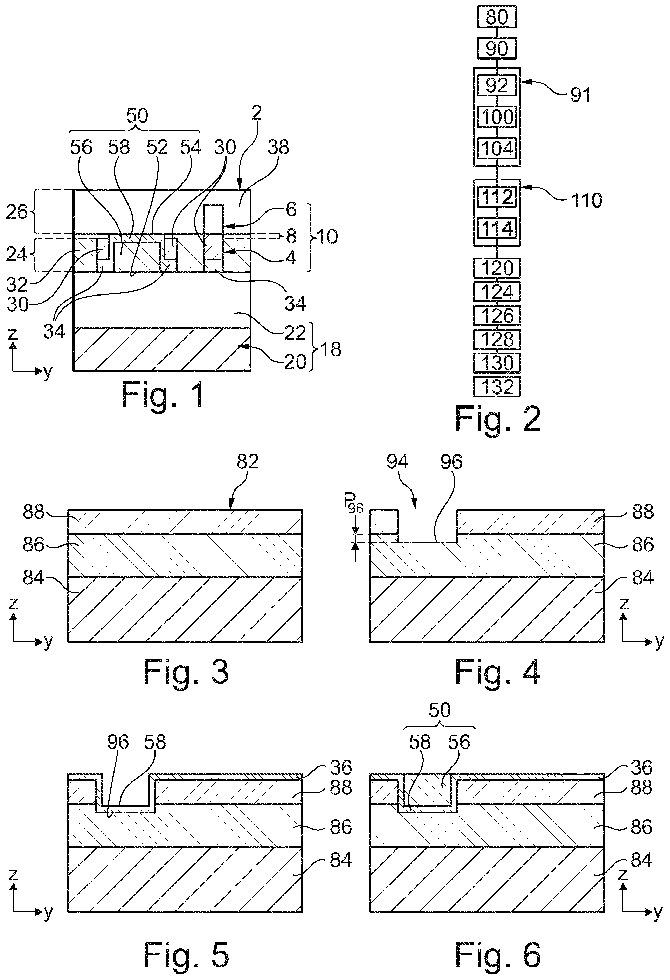

La figure 1 représente une puce photonique 2 comportant des composants photoniques qui guident et/ou modulent la phase ou l'amplitude d'un signal optique. Typiquement, la longueur d'onde du signal optique guidé et/ou modulé est comprise entre 1250 nm et 1590 nm.

En pratique, une telle puce photonique 2 comporte plusieurs composants optiques. Par exemple, chacun de ces composants optiques est choisi dans le groupe constitué des composants optiques suivants :
- un guide d'onde,
- une source laser,
- un modulateur de phase et/ou d'amplitude,
- un filtre optique,
- un miroir,
- une interface de raccordement de la puce photonique à une fibre optique.

Plus précisément, la puce photonique 2 comporte :
- au moins deux parties de composants optiques couplées optiquement l'une à l'autre par l'intermédiaire d'un couplage optique, ou
- au moins deux parties de composants optiques couplées capacitivement l'une à l'autre par l'intermédiaire d'un couplage capacitif.

Sur la figure 1, les parties de composants optiques couplées entre elles par un couplage optique ou capacitif portent les références numériques, respectivement, 4 et 6.

À titre d'illustration, des parties de composants optiques couplées optiquement l'une à l'autre sont typiquement des portions de guides d'onde suffisamment proches l'une de l'autre pour qu'au moins 50 % et, de préférence, plus de 80 % de la puissance du signal optique se propageant dans l'un de ces deux guides d'ondes soit transmise à l'autre de ces deux guides d'ondes. Par exemple, un tel couplage optique est un couplage adiabatique tel que décrit en détail dans l'article suivant : B. Ben Bakir et al., « Hybrid Si/III-V lasers with adiabatic coupling », 2011.

Des parties de composants optiques couplées capacitivement l'une à l'autre sont, par exemple, les deux électrodes d'un modulateur de phase et/ou d'amplitude. Un tel modulateur est par exemple divulgué dans la demande US20170237229.

Pour réaliser un tel couplage optique ou capacitif, les deux parties 4 et 6 de composants optiques sont séparées l'une de l'autre par une fine couche diélectrique 8. Une fine couche diélectrique est une couche en matériau diélectrique dont l'épaisseur est inférieure à 250 nm et, typiquement, inférieure à 150 nm. Dans le cas d'un couplage optique, l'épaisseur de la fine couche diélectrique est souvent comprise entre 100 nm et 250 nm ou entre 100 nm et 200 nm. Dans le cas d'un couplage capacitif, l'épaisseur de la fine couche diélectrique est généralement comprise entre 5 nm et 50 nm et le plus souvent comprise entre 5 nm et 30 nm ou entre 5 nm et 20 nm. Pour rester compatible avec l'utilisation d'un substrat SOI standard pour fabriquer la puce photonique 2, la fine couche diélectrique est une fine couche d'oxyde de silicium.

Pour simplifier la figure 1 et les suivantes, seule une portion de la puce photonique 2 comportant les deux parties 4 et 6 de composants optiques couplées entre elles à travers la fine couche diélectrique 8 est représentée.

Ici, la description est faite dans le cas particulier où les parties 4 et 6 sont, respectivement, l'électrode inférieure et l'électrode supérieure d'un modulateur 10 de phase et/ou d'amplitude du signal optique. Dans ce cas particulier, les parties 4 et 6 de composants optiques sont couplées capacitivement l'une à l'autre. Par exemple, l'architecture du modulateur 10 est identique ou similaire à l'architecture du modulateur décrit dans la demande US20170237229. Ainsi, par la suite, l'architecture précise du modulateur 10 n'est pas décrite en détail. Toutefois, tout ce qui est décrit par la suite dans ce cas particulier s'applique également au cas où les parties 4 et 6 sont couplées l'une à l'autre par l'intermédiaire d'un couplage optique.

Les figures sont orientées par rapport à un repère orthogonal XYZ. Les directions X et Y sont horizontales. La direction X est perpendiculaire au plan de coupe. La direction Z est verticale. Dans ce texte, les termes tels « au-dessus », « au-dessous », « supérieur », « inférieur » sont définis par rapport à la direction Z.

La puce photonique 2 comporte successivement en allant du bas vers le haut :
- un substrat 18 constitué, en allant du bas vers le haut, d'un support 20 et d'une couche 22 en matériau diélectrique,
- une couche 24 de matériau semi-conducteur encapsulé, directement située sur une face supérieure de la couche 22 en matériau diélectrique,
- la fine couche 8 en oxyde de silicium, et
- une couche 26 à l'intérieur de laquelle la partie 6 est encapsulée.

L'épaisseur du support 20 est typiquement supérieure à 200 µm ou 400 µm. Par exemple, le support 20 est réalisé en silicium ou en silicium polycristalin.

La couche 22 est réalisée dans un matériau diélectrique ayant des propriétés optiques et électriques proches ou identiques aux propriétés optiques et électriques de l'oxyde de silicium. Dans cet exemple de réalisation, la couche 22 est une couche en oxyde de silicium. L'épaisseur de la couche 22 est typiquement supérieure à 500 nm ou à 1 µm ou plus. Dans ce texte, un matériau diélectrique est un matériau dont la conductivité électrique à 20°C est inférieure à 10 ⁻⁷ S/m et, de préférence, inférieure à 10 ⁻⁹ S/m ou 10 ⁻¹⁵ S/m. De plus, son indice de réfraction est inférieure l'indice de réfraction du matériau semi-conducteur encapsulé dans la couche 24.

La couche 24 contient un matériau semi-conducteur 30 dans lequel est réalisée la partie 4 encapsulée dans un matériau 32 d'encapsulation diélectrique. Comme pour la couche 22, le matériau 32 d'encapsulation diélectrique est un matériau diélectrique dont les propriétés optiques et électriques sont proches ou identiques de celles de l'oxyde de silicium. Dans cet exemple, le matériau 32 est de l'oxyde de silicium.

Dans ce mode de réalisation, le matériau semi-conducteur 30 est du silicium monocristallin. Ainsi, la partie 4 est réalisée en silicium monocristallin. Par exemple, l'épaisseur du silicium monocristallin dans la couche 24 est comprise entre 100 nm et 800 nm et, typiquement, entre 300 nm et 500 nm. Toujours dans ce mode de réalisation, la couche 24 comporte aussi des reliquats 34 d'une couche 36 (figure 5) de masquage utilisée pour structurer le silicium monocristallin afin de réaliser les parties de composants optiques encapsulées à l'intérieur de la couche 24. Ces reliquats 34 sont situés à l'intérieur de la couche 24 et s'étendent chacun le long de l'interface entre les couches 22 et 24. Ici, un tel reliquat 34 sépare l'extrémité inférieure de la partie 4, de la couche 22. La couche 36 de masquage et les reliquats 34 sont réalisés, dans ce mode de réalisation, dans un matériau diélectrique différent de l'oxyde de silicium. Ici, la couche 36 est réalisée en nitrure de silicium.

L'épaisseur des reliquats 34 et de la couche 36 est typiquement trois ou cinq fois inférieure à l'épaisseur de silicium monocristallin 30 encapsulé dans la couche 24. Par exemple, l'épaisseur de la couche 36 est inférieure à 100 nm.

La couche 26 comporte la partie 6 d'un composant optique encapsulée à l'intérieur d'un matériau 38 d'encapsulation diélectrique. Le matériau 38 peut-être le même que le matériau 32 ou être un matériau diélectrique différent du matériau 32. Ici, le matériau 38 est le même que le matériau 32. Le matériau 38 est donc de l'oxyde de silicium. La partie 6 d'un composant optique est réalisée dans le même matériau que la partie 4 d'un composant optique ou dans un autre matériau semi-conducteur, comme par exemple l'alliage InP.

L'épaisseur de la fine couche diélectrique 8 est généralement beaucoup plus petite que l'épaisseur de la couche enterrée des substrats SOI standards. En effet, typiquement, la couche enterrée en oxyde de silicium d'un substrat SOI standard à une épaisseur supérieure à 500 nm ou à 1 µm et, généralement, inférieure à 10 µm ou 20 µm. Il est donc nécessaire, lors de la fabrication de la puce photonique 2, d'amincir la couche enterrée d'un substrat SOI standard tout en conservant une bonne précision sur son épaisseur pour fabriquer cette fine couche diélectrique 8.

À cet effet, la puce photonique 2 comporte plusieurs plots répartis uniformément sur toute la face horizontale de la couche 22. Pour simplifier les figures, seul un plot 50 est représenté. Ici, les autres plots de la puce photonique 2 sont structurellement identiques au plot 50 sauf qu'ils sont situés à d'autres emplacements sur la face supérieure de la couche 22. Dans ces conditions, par la suite, seul le plot 50 est décrit en détail et la référence numérique 50 est aussi utilisée pour désigner collectivement l'ensemble de ces plots de la puce photonique 2.

Le plot 50 s'étend verticalement depuis une face 52 affleurant la face supérieure de la couche 22, jusqu'à une face 54 appelée dans ce texte « face enfouie». La face 54 affleure la face supérieure de la fine couche diélectrique 8 dans ce mode de réalisation. Elle est donc ici située au niveau de l'interface entre les couches 8 et 26. Ainsi, le plot 50 traverse de part en part les couches 8 et 24.

Le plot 50 est un cylindre droit dont les génératrices sont verticales. Sa section horizontale est par exemple rectangulaire ou circulaire. La surface de la face 54 est typiquement supérieure à 1 µm² ou 5 µm² et, généralement, inférieure à 50 µm² ou 20 µm². La densité des plots 50 dans la puce photonique 2 est supérieure 10 % et, de préférence, supérieure ou égale à 20 %. Avantageusement, la densité des plots 50 est aussi inférieure à 40 % ou 30 %. Dans cet exemple de réalisation, la densité des plots 50 est égale à 20 %. La densité des plots 50 est égale au rapport C₅₄/S₂₂×100, où :
- C₅₄ est le cumul des surfaces des faces 54 de tous les plots 50 de la puce photonique 2,
- S₂₂ est la surface totale de la face horizontale supérieure de la couche 22,
- le symbole « x » désigne l'opération de multiplication scalaire.

La face 54 est réalisée dans un matériau qui permet d'utiliser cette face 54 comme couche d'arrêt lors de l'amincissement d'une couche enterrée en oxyde de silicium. La face 54 est donc réalisée dans un matériau différent de l'oxyde de silicium. Par exemple, dans ce premier mode de réalisation, la face 54 est réalisée en nitrure de silicium. Plus précisément, dans ce mode de réalisation, le plot 50 comporte un cœur 56 en oxyde de silicium et une fine pellicule 58 en nitrure de silicium qui recouvre ce cœur 56.

Le procédé de fabrication de la puce photonique 2 va maintenant être décrit en référence à l'organigramme de la figure 2 et à l'aide des figures 3 à 11.

Initialement, lors d'une étape 80, un substrat SOI standard 82 est fourni (figure 3). Le substrat 82 comporte un empilement des trois couches suivantes immédiatement superposées les unes sur les autres en allant du bas vers le haut :
- un support 84,
- une couche enterrée 86 en oxyde de silicium, et
- une couche 88 en silicium monocristallin.

Par exemple, le support 84 est réalisé en silicium. Son épaisseur est classiquement supérieure à 400 µm ou 700 µm.

L'épaisseur de la couche enterrée 86 est classiquement supérieure à 500 nm ou 1 µm et, généralement, inférieure à 10 µm ou 20 µm.

Dans le cas particulier où la partie 4 est une électrode d'un modulateur de phase, lors d'une étape 90, un ou plusieurs dopages localisés de la couche 88 en silicium monocristallin sont réalisés à l'emplacement où la partie 4 doit être formée.

Lors d'une étape 91, les plots 50 sont réalisés. Ici, pour cela, lors d'une opération 92, une cavité 94 (figure 4) est réalisée à l'emplacement de chaque plot 50. La cavité 94 traverse de part en part la couche 88 en silicium monocristallin et présente un fond 96 situé à l'intérieur de la couche 86. Le fond 96 s'étend horizontalement. Il est situé à une profondeur P₉₆ à l'intérieur de la couche 86. La profondeur P₉₆ est mesurée à partir de la face supérieure de la couche 86. La profondeur P₉₆ est inférieure et, typiquement deux ou cinq fois inférieure, à l'épaisseur e₈₆ de la couche 86. De préférence, la profondeur P₉₆ est inférieure à 150 nm ou à 100 nm. Ici la profondeur P₉₆ est égale à l'épaisseur e₈ de la fine couche diélectrique 8 et donc inférieure à 30 nm.

Ici, la cavité 94 est, par exemple, creusée en mettant en œuvre une ou plusieurs gravures chimiques.

Le fait de choisir la profondeur P₉₆ petite accroît la précision sur cette profondeur. En effet, si la précision de la gravure de la couche 86 est de plus ou moins 5 %, alors si la profondeur P₉₆ est égale à 100 nm, cela correspond à une erreur maximale de plus ou moins 5 nm. À l'inverse, si la profondeur P₉₆ est beaucoup plus grande, par exemple égale à 1 µm, l'erreur maximale est alors de plus ou moins 50 nm et donc dix fois supérieure. Ainsi, en limitant la profondeur P₉₆, la précision est accrue.

Lors d'une opération 100, la couche 36 de masquage en matériau diélectrique est déposée sur toute la face supérieure. Cette couche 36 recouvre toute la face supérieure de la couche 88 en silicium monocristallin. Une portion de cette couche 36 recouvre également le fond 96 de la cavité 94 et forme la pellicule 58 du plot 50.

L'épaisseur de la couche 36 le long des parois verticales de la cavité 94 est plus difficilement maîtrisable que l'épaisseur de la couche 36 le long des faces horizontales. Ainsi, pour garantir que le cœur 56 est systématiquement isolé de la couche 86 par la pellicule 58, ici, l'épaisseur e₃₆ de la couche 36 est choisie supérieure à la profondeur P₉₆. Dans ces conditions, le cœur 56, qui est formé lors de l'étape suivante, est uniquement situé au-dessus de la couche 86.

Lors d'une opération 104, le centre de la cavité 94 est rempli avec un matériau différent du silicium pour former le cœur 56. Ici, la cavité 94 est remplie, à ce stade, avec de l'oxyde de silicium. Par exemple, une couche d'oxyde de silicium d'épaisseur supérieure à la profondeur restante de la cavité 94 est déposée. Cette couche d'oxyde de silicium est par exemple déposée sur toute la face supérieure de la couche 36 de masquage en mettant en œuvre un procédé de dépôt chimiques en phase vapeur tel que le procédé connu sous l'acronyme PECVD (« plasma enhanced chemical vapor deposition »).

Ensuite, la face supérieure est polie en utilisant comme couche d'arrêt de ce polissage, la couche 36. L'état représenté sur la figure 6 est alors obtenu. La réalisation du plot 50 est alors terminée.

Lors d'une étape 110, la couche 88 en silicium monocristallin est structurée pour former, notamment, la partie 4 de composant optique.

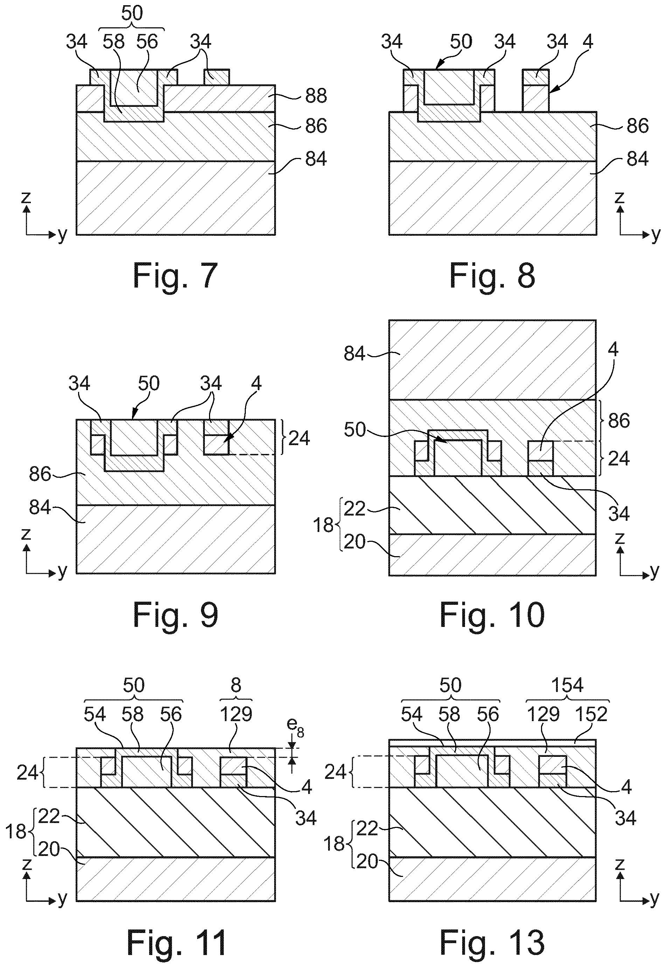

Pour cela, lors d'une opération 112, la couche 36 de masquage est gravée pour laisser subsister des reliquats 34 de cette couche 36 seulement au-dessus des emplacements où une partie de composant optique doit être réalisée. L'état représenté sur la figure 7 est alors obtenu à l'issue de l'opération 112.

De préférence, le cumul des surfaces des faces supérieures des reliquats 34 obtenus à l'issue de l'opération 112, est supérieur à 10 % et, de préférence, supérieure ou égale à 20 % de la surface horizontale de la couche 88. Pour cela, ici, des reliquats 34 sont formés autour de chacun des plots 50 réalisés afin d'accroître la surface de nitrure de silicium restante et ainsi pouvoir utiliser ces reliquats 34 comme couche d'arrêt lors d'une étape suivante.

Lors d'une opération 114, la couche 88 est gravée à travers le masque de gravure constitué par les reliquats 34. Par exemple, lors de cette opération 114, un agent de gravure qui dissout le silicium monocristallin est appliqué sur la face supérieure du masque de gravure. Cet agent de gravure peut être liquide ou gazeux.

À l'issue de l'opération 114, l'état représenté sur la figure 8 est obtenu. La gravure de la couche 88 forme des creux aux emplacements où le silicium monocristallin a été enlevé. L'étape 110 de structuration du silicium monocristallin est alors terminée et la partie 4 d'un composant optique est obtenue.

Lors d'une étape 120, la couche de silicium monocristallin structurée est encapsulée dans le matériau 32 d'encapsulation pour former la couche 24 de silicium monocristallin encapsulé. À l'issue de l'étape 120, l'état représenté sur la figure 9 est obtenu. Lors de l'étape 120, une couche du matériau 32 d'encapsulation est déposée sur toute la face supérieure du masque de gravure. Cette couche de matériau 32 remplit complètement les creux formés dans la couche de silicium monocristallin. Pour cela, l'épaisseur de la couche du matériau 32 d'encapsulation est supérieure à la profondeur des creux à remplir. Par exemple, la couche de matériaux 32 d'encapsulation est déposée en mettant en œuvre un procédé de dépôt chimique en phase vapeur. Ensuite, le matériau 32 d'encapsulation qui est situé en dehors des creux est retiré et la face supérieure de la couche 24 est préparée pour un collage, par exemple direct ou moléculaire. Pour cela, la face supérieure de la couche 24 est polie à l'aide d'un procédé de CMP (« Chimical-Mechanical Polishing »). Ce procédé de CMP est arrêté lorsque la face supérieure des reliquats 34 est mise à nu.

Lors d'une étape 124, le substrat 18 est collé sur la couche 24. L'état représenté sur la figure 10 est alors obtenu. Dans la figure 10 et dans la figure suivante, l'empilement des couches 84, 86 et 24 est retourné, de sorte que la couche 24 se situe maintenant en bas de cet empilement avec sa face collée sur la face supérieure de la couche 22 du substrat 18. Par exemple, lors de l'étape 124, la couche 24 est collée sur la couche 22 par collage moléculaire, c'est-à-dire sans apport de matière extérieure.

Lors d'une étape 126, le substrat 84 est retiré pour mettre à nu la face arrière de la couche enterrée 86.

Ensuite, lors d'une étape 128, la couche enterrée 86 est amincie pour laisser subsister qu'une couche résiduelle 129 d'oxyde de silicium déposée sur la couche 24. Cette couche résiduelle 129 forme ici la totalité de la fine couche diélectrique 8. L'état représenté sur la figure 11 est alors obtenu.

Lors de l'étape 128, l'amincissement de la couche 86 est arrêté en utilisant les faces enfouies 54 des plots 50 comme couche d'arrêt. Autrement dit, l'amincissement de la couche 86 est arrêté dès que les faces enfouies 54 sont mises à nu.

Étant donné que les faces enfouies 54 sont situées à la profondeur P₉₆ à l'intérieur de la couche enterrée 86, au moment où l'amincissement de la couche enterrée 86 est arrêté, l'épaisseur de e₁₂₉ de la couche résiduelle 129 est précisément égale à la profondeur P₉₆. Dans ce premier mode de réalisation, l'épaisseur e₁₂₉ est égale à l'épaisseur e₈ de la fine couche diélectrique 8. Ainsi, l'utilisation des plots 50 permet de réaliser simplement la fine couche diélectrique 8 avec une grande précision sur son épaisseur. Par exemple, l'amincissement de la couche enterrée 86 est réalisé à l'aide d'un procédé de CMP.

Lors d'une étape 130, la partie 6 d'un composant optique est réalisée sur la fine couche diélectrique 8.

Puis, lors d'une étape 132, la partie 6 d'un composant optique réalisée est encapsulée dans le matériau diélectrique 38 pour obtenir la couche 26. Les étapes 130 et 132 sont par exemple réalisées comme décrites dans la demande US20170237229.

À l'issue des étapes 130 et 132, la puce photonique 2 représentée sur la figure 1 est obtenue.

Ensuite, des étapes supplémentaires sont mises en œuvre pour achever la fabrication de la puce photonique 2. Par exemple, dans le cas particulier où le composant optique est un modulateur, une étape de réalisation de prises de contact électrique sur les parties 4 et 6 est effectuée.

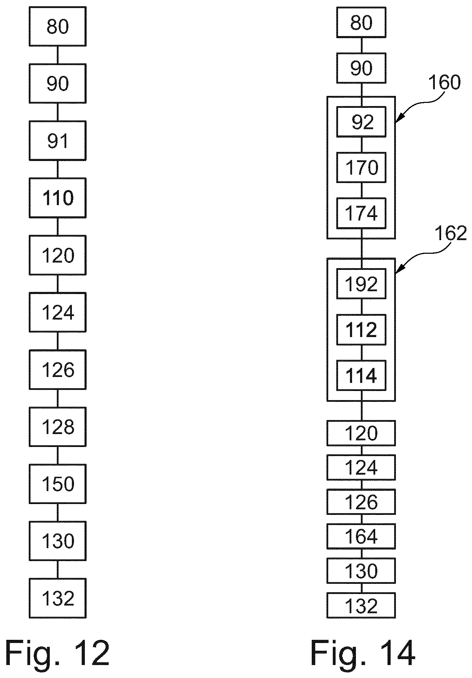

La figure 12 représente une première variante du procédé de fabrication de la figure 2. Cette première variante est identique au procédé de fabrication de la figure 2 sauf qu'une étape 150 est introduite entre les étapes 128 et 130.

L'étape 150 est une étape de dépôt d'une couche diélectrique supplémentaire 152 (Figure 13) directement sur la couche résiduelle 129 obtenue à l'issue de l'étape 128. L'état obtenu à l'issue de l'étape 150 est représenté sur la figure 13. Dans cette variante, c'est la superposition de la couche résiduelle 129 et de la couche diélectrique supplémentaire 152 qui forme une fine couche diélectrique 154 à travers laquelle les parties 4 et 6 sont couplées. La fine couche 154 est fonctionnellement identique à la fine couche 8. Toutefois, dans cette variante, la fine couche 154 est généralement plus épaisse que la fine couche 8. Ainsi, cette variante est plutôt destinée à la réalisation de parties 4 et 6 de composants optiques couplées optiquement à travers la fine couche 154. La couche diélectrique supplémentaire 152 est réalisée en oxyde de silicium ou dans un autre matériau diélectrique comme un nitrure de silicium. Le dépôt de cette couche diélectrique supplémentaire 152 dégrade très peu la précision sur l'épaisseur de la fine couche 154 située entre les parties 4 et 6 de composants optiques. En effet, la précision sur l'épaisseur de la couche diélectrique 152 obtenue par dépôt de matériau diélectrique est très supérieure à la précision sur l'épaisseur d'une couche diélectrique obtenue par amincissement d'une couche diélectrique plus épaisse. Par exemple, dans cette variante, l'épaisseur de la couche résiduelle 129 est comprise entre 30 nm et 50 nm et l'épaisseur de la couche diélectrique supplémentaire 152 est comprise entre 50 nm et 150 nm.

La figure 14 représente une seconde variante du procédé de la figure 2. Cette seconde variante est identique au procédé de la figure 2 sauf que les étapes 91, 110, 128 sont remplacées, respectivement, par des étapes 160, 162, 164.

L'étape 160 est identique à l'étape 91 sauf que les opérations 100 et 104 sont remplacées, respectivement, par des opérations 170 et 174.

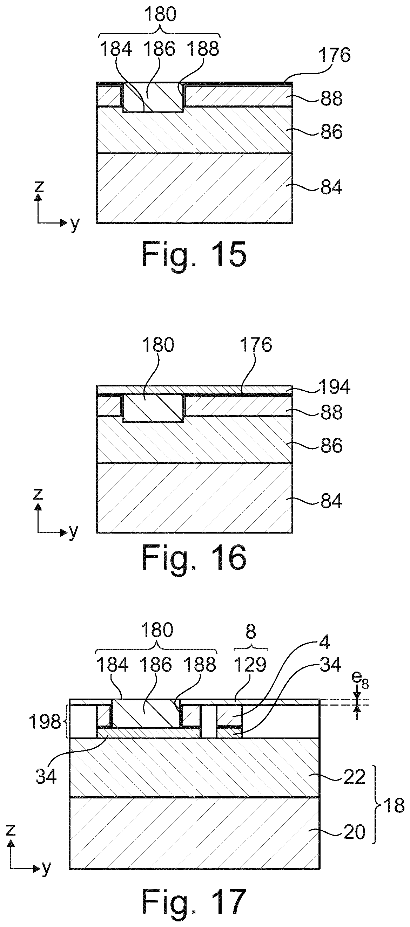

L'opération 170 est une opération d'oxydation du silicium monocristallin pour former une couche 176 (figure 15) d'oxyde thermique qui recouvre la totalité de la face supérieure de la couche 88 de silicium monocristallin ainsi que les portions des parois verticales de la cavité 94 réalisées en silicium monocristallin.

La couche 176 ainsi obtenue ne couvre pas les parois de la cavité 94 réalisées en oxyde de silicium. Ainsi, la couche 176 ne recouvre pas le fond 96 de la cavité 94 car ce fond est réalisé en oxyde de silicium.

L'opération 174 est une opération de remplissage la cavité 94 avec un matériau de remplissage différent de l'oxyde de silicium. Dans cet exemple de réalisation, le matériau de remplissage est du silicium polycristallin. Pour cela, il est procédé comme décrit pour l'opération 104 sauf que :
- au lieu de déposer de l'oxyde de silicium, c'est du silicium polycristallin qui est déposé, et
- le polissage de la face supérieure utilise la couche 176 comme couche d'arrêt.

À l'issue de l'étape 160, l'état représenté sur la figure 15 est obtenu. Sur la figure 15, le plot réalisé porte la référence numérique 180. Ce plot 180, comme le plot 50 précédemment décrit, comporte :
- une face enfouie 184 qui s'étend horizontalement à l'intérieur de la couche 86 à la profondeur P₉₆,
- un cœur 186 en silicium polycristallin, et
- une pellicule 188 en oxyde de silicium qui recouvre la portion des faces verticales du cœur 186 situées à l'intérieur de la couche 88 en silicium.

L'étape 162 est identique à l'étape 110 sauf qu'elle comporte, avant l'opération 112, une opération 192 de dépôt d'une couche 194 (Figure 16) de masquage sur les faces supérieures des plots 180 et de la couche 176 d'oxyde thermique. À l'issue de l'opération 194, l'état représenté sur la figure 16 est obtenu.

Par exemple, la couche 194 de masquage est identique à la couche 36 de masquage sauf que dans cette variante, cette couche 194 recouvre en plus les faces supérieures des plots 180. De plus, lors de l'opération 192, l'épaisseur de la couche 194 déposée peut être inférieure à la profondeur P₉₆.

Lors de l'étape 112, c'est la couche 194 de masquage qui est gravée pour laisser subsister les reliquats 34 seulement au-dessus des emplacements de la couche 88 en silicium monocristallin qui ne doivent pas être gravés. Dans cette variante, la face supérieure de chaque plot 180 est entièrement recouverte d'un reliquat 34 respectif pour protéger le cœur 186 en silicium polycristallin lors de l'opération suivant 114 de gravure. Cela permet d'obtenir simplement une surface horizontale cumulée de reliquat 34 plus importante qu'avec le procédé de la figure 2 et donc d'obtenir une couche d'arrêt utilisée lors de l'étape 120 dont la surface est plus grande.

L'étape 164 est identique à l'étape 128 sauf que c'est la face enfouie 184 qui est utilisée comme couche d'arrêt. À l'issue de l'étape 164, l'état représenté sur la figure 17 est obtenu. Sur la figure 17, la couche de silicium monocristallin encapsulée porte la référence numérique 198 et correspond fonctionnellement à la couche 24 de la puce photonique 2.

Les étapes suivantes sont identiques à celles décrites dans le cas de la figure 2.

### Chapitre III : Variantes

### Variantes du procédé de la figure 2 :

Les cavités 94 peuvent être remplies avec tout autre matériau de remplissage différent du silicium. Par exemple, les cavités sont remplies avec du nitrure de silicium.

Dans le cas où le matériau de remplissage est différent de l'oxyde de silicium ou si l'épaisseur de la couche 36 de masquage déposée sur les parois verticales de la cavité 94 est systématiquement suffisante pour isoler correctement le cœur 56 de la couche enterrée 86, alors l'épaisseur e₃₆ de la couche 36 peut être inférieure à la profondeur P₉₆.

### Variantes du procédé de la figure 14 :

Le poly-silicium utilisé pour remplir les cavités 94 peut être remplacé par tout matériau, différent de l'oxyde de silicium, susceptible d'être poli par un procédé de CMP avec arrêt sur la couche d'oxyde thermique. Par exemple, le poly-silicium peut être remplacé par du poly-germanium ou du nitrure de silicium.

La couche 194 de masquage peut être réalisée dans un autre matériau que du nitrure de silicium. Par exemple, en variante, la couche 194 de masquage est réalisée en nitrure de titane ou en oxyde de silicium.

En variante, la couche 194 de masquage est entièrement retirée après la structuration de la couche 88 en matériau semi-conducteur. Par exemple, dans ce cas, la couche de masquage est réalisée dans un matériau photosensible comme une résine photosensible.

### Variantes communes à tous les procédés de fabrication :

D'autres matériaux d'encapsulation diélectriques peuvent être utilisés à la place de l'oxyde de silicium pour encapsuler le silicium monocristallin. Toutefois, de préférence, le matériau d'encapsulation choisi présente des propriétés optiques et électriques similaires à celles de l'oxyde de silicium. De plus, de préférence, le matériau d'encapsulation choisi peut être déposé par dépôt chimique en phase vapeur et, avantageusement, par un procédé de PECVD. Par exemple, en variante, le matériau d'encapsulation diélectrique est de l'orthosilicate de tétraéthyle plus connu sous l'acronyme TEOS ou du silane.

D'autres formes sont possibles pour les plots 50. Par exemple, la section horizontale des plots 50 peut avoir une forme quelconque. Il n'est pas nécessaire que les sections horizontales de tous les plots de la puce photonique 2 soient identiques. Par exemple, en variante, une partie des plots de la puce photonique ont une section rectangulaire tandis qu'une autre partie des plots ont une section horizontale différente, par exemple, circulaire.

Dans le cas où il n'est pas nécessaire que les parties 4 et 6 de composants optiques soient dopées, alors l'étape 90 de dopage de ces parties 4 et 6 sont omises.

D'autres modes de réalisation de l'opération 114 de gravure de la couche en silicium monocristallin sont possibles. Par exemple, pour structurer, dans la couche en silicium monocristallin, une partie de composant optique qui présente plusieurs épaisseurs, une opération de gravure multi-niveaux peut être mise en œuvre.

L'étape 128 d'amincissement de la couche enterrée peut être réalisée par d'autres moyens qu'un polissage mécano-chimique. Par exemple, en variante, l'amincissement est réalisé en utilisant seulement une gravure chimique. Dans ce dernier cas, la gravure chimique est arrêtée dès que des composants issus de la gravure des faces enfouies 54 sont détectés dans le bain d'agent de gravure utilisé pour réaliser cette gravure chimique.

Dans une autre variante, l'étape 128 d'amincissement de la couche enterrée comporte une première puis une seconde opérations d'amincissement. La première opération d'amincissement est une opération d'amincissement avec arrêt sur les faces enfouies 54 des plots 50. Cette première opération d'amincissement est identique à celle décrite dans les modes de réalisation précédents. Cette première opération d'amincissement permet d'obtenir la couche résiduelle 129. A l'issue de la première opération d'amincissement, la seconde opération d'amincissement est exécutée pour amincir la couche résiduelle 129. Les première et seconde opérations d'amincissement diffèrent l'une de l'autre par la chimie et/ou la physique mise en œuvre. Par exemple, typiquement, l'agent de gravure utilisé lors de la seconde opération d'amincissement est différent de l'agent de gravure utilisé lors de la première opération d'amincissement. En particulier, lors de la seconde opération d'amincissement, l'agent de gravure est un agent de gravure non sélectif qui grave à la même vitesse l'oxyde de silicium et la face enfouie 54 des plots. A l'inverse, lors de la première opération d'amincissement, il n'est pas nécessaire que l'agent de gravure utilisé grave à la même vitesse l'oxyde de silicium et les faces enfouies 54 des plots. Par exemple, la première opération d'amincissement est utilisée pour obtenir la couche résiduelle 129 dont l'épaisseur est comprise entre entre 40 nm et 150 nm, puis la seconde opération d'amincissement est utilisée pour obtenir une fine couche diélectrique dont l'épaisseur est inférieure à 30 nm.

Les parties de composants optiques peuvent être couplées optiquement ou capacitivement l'une à l'autre à travers la fine couche diélectrique. Dans le cas, d'un couplage optique, l'épaisseur souhaitée pour la fine couche diélectrique est généralement plus grande que l'épaisseur souhaitée pour la fine couche diélectrique dans le cas d'un couplage capacitif.

Les prises de contact électrique et les interconnexions électriques peuvent être réalisées dans le substrat 18 ou dans une couche d'interconnexion supplémentaire déposée sur la couche 26.

Le matériau semi-conducteur 30 utilisé n'est pas nécessairement du silicium monocristallin. Par exemple, en variante, le matériau semi-conducteur est du germanium ou du carbure de silicium. Dans le cas du germanium, l'empilement initial à partir duquel débute le procédé de fabrication est alors connu sous l'acronyme GOI (« Germanium On Insulator »).

Plusieurs des modes de réalisation décrits ici peuvent être combinés entre eux.

### Chapitre III : Avantages des modes de réalisation décrits :

Le fait d'utiliser les faces enfouies des plots 50, 180 comme faces d'arrêt lors de l'amincissement de la couche enterrée 86 permet d'augmenter la précision sur l'épaisseur de la couche résiduelle 129 obtenue. Enfin de compte, cela limite la dispersion des caractéristiques des puces photoniques fabriquées selon les procédés de fabrication décrits ici. De plus, ce procédé de fabrication reste compatible avec l'utilisation de substrats SOI standards, c'est-à-dire avec l'utilisation de substrats SOI dans lesquels l'épaisseur de la couche enterrée est supérieure à plusieurs centaines de nanomètres. Enfin, la couche résiduelle 129 est obtenue sans retirer complément la couche enterrée 86 après le retournement du substrat. Un tel retrait complet de la couche enterrée est désavantageux en ce que le retrait complet de la couche enterrée 86 est alors arrêté en utilisant le matériau semi-conducteur structuré comme couche d'arrêt. Cela conduit à augmenter la rugosité des parties de composants optiques fabriqués dans le matériau semi-conducteur et donc à dégrader les performances de la puce photonique fabriquée. De plus, le retrait complet de la couche enterrée accroît la consommation d'oxyde de silicium. En évitant le retrait complet de la couche enterrée 86, les procédés décrits ici permettent d'éviter ces inconvénients.

L'utilisation d'une couche 176 d'oxyde thermique en tant que couche d'arrêt lors de la réalisation des plots 180 permet d'éviter une opération de dépôt d'un autre matériau pour former cette couche d'arrêt.

Le fait de déposer la couche 194 de masquage y compris au-dessus des plots 180 permet d'obtenir une couche de masquage dont la surface est plus importante que lorsque le procédé de la figure 2 est mis en œuvre pour réaliser la même puce photonique. Autrement dit, la densité de matériau de masquage sur la face à polir à la fin de l'étape d'encapsulation est plus importante. Le fait que la densité de matériau de masquage sur la face à polir soit plus importante permet d'obtenir une couche de matériau semi-conducteur encapsulé plus plane puisque la couche de masquage est également utilisée comme couche d'arrêt du polissage de la couche de matériau semi-conducteur encapsulé. En fin de compte, cela améliore le collage du substrat 18 sur la couche 198 en matériau semi-conducteur encapsulé.

Le fait d'utiliser la même couche 36 pour former le masque de gravure et les faces enfouies 84 des plots 50 simplifie le procédé de fabrication. En particulier, cela offre la possibilité d'utiliser l'oxyde de silicium comme matériau de remplissage des cavités 94.

Le fait que l'épaisseur e₃₆ de la couche 36 de masquage soit supérieure à la profondeur prédéterminée P₉₆ permet de réaliser le cœur 56 du plot 50 en oxyde de silicium, ce qui simplifie le procédé de fabrication.

Le fait que le masque de gravure formé sur la couche 88 en silicium monocristallin recouvre plus de 10 % de la surface supérieure horizontale de cette couche 88, permet d'utiliser en plus ce masque de gravure comme couche d'arrêt lors du polissage de la couche 24 de matériau semi-conducteur encapsulé. Cela simplifie le procédé de fabrication.

Le fait que la profondeur P₉₆ soit inférieure à 150 nm permet d'augmenter la précision sur l'épaisseur de la couche résiduelle 129 obtenue. En effet, la marge d'erreur sur la profondeur P₉₆ est typiquement de plus ou moins 5 % avec les procédés de gravure classique. L'amplitude de l'erreur sur l'épaisseur de la couche résiduelle 129 est donc inférieure à 7,5 nm. Ceci est bien plus précis que lorsque des procédés connus sont mis en œuvre pour former une telle couche résiduelle d'oxyde de silicium.

Le fait que le cumul des surfaces enfouies 54 représente plus de 10 % de la surface de la couche enterrée permet d'améliorer la planéité de la couche résiduelle 129.

## Revendications

1. Procédé de fabrication d'une puce photonique, ce procédé comportant :
- la fourniture (80) d'un premier empilement comportant successivement un support, une couche enterrée en oxyde de silicium et une couche en matériau semi-conducteur, puis
- la structuration (110 ; 162) de la couche en matériau semi-conducteur pour réaliser au moins une première partie d'un composant optique dans la couche en matériau semi-conducteur, puis
- l'encapsulation (120) de la couche en matériau semi-conducteur structurée, dans un matériau d'encapsulation diélectrique pour obtenir une couche de matériau semi-conducteur encapsulé dans un matériau diélectrique, puis
- le collage (124) d'un substrat sur la couche de matériau semi-conducteur encapsulé, puis
- le retrait (126) du support pour mettre à nue la couche enterrée, puis
- l'amincissement (128 ; 164) de la couche enterrée pour laisser subsister une couche résiduelle en oxyde de silicium sur la couche en matériau semi-conducteur encapsulé du côté où le support a été retiré, puis
- la réalisation (130) d'une seconde partie d'un composant optique sur la couche résiduelle en oxyde de silicium, cette seconde partie d'un composant optique étant couplée à la première partie d'un composant optique à travers la couche résiduelle en oxyde de silicium par un couplage optique ou capacitif,
**caractérisé en ce que** :
- avant le collage du substrat, le procédé comporte la réalisation (91 ; 160) de plots enfoncés à l'intérieur de la couche enterrée, chacun de ces plots comportant une face enfouie qui s'étend parallèlement à l'interface entre la couche enterrée et la couche en matériau semi-conducteur à une profondeur prédéterminée à l'intérieur de la couche enterrée, chacune des faces enfouies étant réalisée dans un matériau différent de l'oxyde de silicium de la couche enterrée, et
- l'amincissement (128 ; 164) de la couche enterrée comporte une opération d'amincissement de la couche enterrée avec arrêt de cet amincissement dès que la face enfouie des plots est mise à nue.

2. Procédé selon la revendication 1, dans lequel la réalisation des plots enfoncés comporte, avant la structuration de la couche en matériau semi-conducteur :
- à l'emplacement de chaque plot, la réalisation (92) d'une cavité qui traverse la couche en matériau semi-conducteur et dont le fond s'étend parallèlement à l'interface entre la couche enterrée et la couche en matériau semi-conducteur à la profondeur prédéterminée à l'intérieur de la couche enterrée, puis
- l'oxydation (170) de la couche en matériau semi-conducteur pour obtenir une couche d'oxyde thermique qui recouvre la couche en matériau semi-conducteur, puis
- le remplissage (174) de chaque cavité avec un matériau de remplissage différent de l'oxyde de silicium de la couche enterrée, puis
- le polissage, avec arrêt sur la couche d'oxyde thermique, de la face à partir de laquelle les cavités ont été remplies avec le matériau de remplissage pour éliminer le matériau de remplissage situé en dehors de ces cavités.

3. Procédé selon la revendication 2, dans lequel :
- la structuration de la couche en matériau semi-conducteur comporte :
- le dépôt (192) d'une couche de masquage qui recouvre les plots enfoncés réalisés et la totalité de la couche en matériau semi-conducteur, cette couche de masquage étant réalisée dans un matériau différent du matériau semi-conducteur, puis
- la gravure (112) de la couche de masquage et de l'oxyde de silicium thermique aux emplacements où la couche de matériau semi-conducteur doit être retirée pour obtenir un masque de gravure, puis
- la gravure (114) de la couche en matériau semi-conducteur à travers le masque de gravure obtenu, cette gravure formant des creux dans la couche en matériau semi-conducteur aux emplacements où le matériau semi-conducteur est gravé,
- l'encapsulation (120) de la couche en matériau semi-conducteur comporte :
- le remplissage des creux avec le matériau d'encapsulation diélectrique, puis
- le polissage, avec arrêt sur la couche de masquage, de la face à partir de laquelle les creux ont été remplis avec le matériau d'encapsulation diélectrique pour éliminer le matériau d'encapsulation diélectrique situé en dehors de ces creux.

4. Procédé selon la revendication 1, dans lequel :
- la réalisation (91) des plots enfoncés comporte, avant la structuration de la couche en matériau semi-conducteur :
- à l'emplacement de chaque plot, la réalisation (92) d'une cavité qui traverse la couche en matériau semi-conducteur et dont le fond s'étend parallèlement à l'interface entre la couche enterrée et la couche en matériau semi-conducteur à la profondeur prédéterminée à l'intérieur de la couche enterrée, puis
- le dépôt (100) d'une couche de masquage qui recouvre la totalité de la couche en matériau semi-conducteur ainsi que le fond de chaque cavité, cette couche de masquage étant réalisée dans un matériau différent de l'oxyde de silicium de la couche enterrée et différent du silicium,
- le remplissage (104) de chaque cavité avec un matériau de remplissage différent du matériau semi-conducteur, puis
- la structuration (110) de la couche en matériau semi-conducteur comporte :
- la gravure (112) de la couche de masquage aux emplacements où la couche de matériau semi-conducteur doit être retirée pour obtenir un masque de gravure, puis
- la gravure (114) de la couche en matériau semi-conducteur à travers le masque de gravure obtenu, cette gravure formant des creux dans la couche en matériau semi-conducteur aux emplacements où le matériau semi-conducteur est gravé.

5. Procédé selon la revendication 4, dans lequel l'épaisseur de la couche de masquage est supérieure à la profondeur prédéterminée.

6. Procédé selon la revendication 4 ou 5, dans lequel :
- le masque de gravure obtenu recouvre au moins dix pourcents de la surface de la couche de matériau semi-conducteur avant qu'elle soit gravée, et
- l'encapsulation (120) de la couche en matériau semi-conducteur comporte :
- le remplissage des creux avec le matériau d'encapsulation diélectrique, puis
- le polissage, avec arrêt sur la couche de masquage, de la face à partir de laquelle les creux ont été remplis avec le matériau d'encapsulation diélectrique pour éliminer le matériau d'encapsulation diélectrique situé en dehors de ces creux.

7. Procédé selon l'une quelconque des revendications précédentes, dans lequel la profondeur prédéterminée est inférieure à 150 nm ou 100 nm.

8. Procédé selon l'une quelconque des revendications précédentes, dans lequel le cumul des surfaces des faces enfouies est supérieur à 10 % de la surface de la couche enterrée.

9. Procédé selon l'une quelconque des revendications précédentes, dans lequel le matériau semi-conducteur est du silicium monocristallin.

10. Procédé selon l'une quelconque des revendications précédentes, dans lequel, lors de l'encapsulation (120) de la couche en matériau semi-conducteur, le matériau d'encapsulation diélectrique utilisé pour encapsuler le matériau semi-conducteur est un oxyde de silicium.

11. Puce photonique obtenue par un procédé de fabrication conforme à l'une quelconque des revendications précédentes, dans laquelle la puce photonique comporte successivement empilées les unes au-dessus des autres :
- un substrat (18),
- une première couche (24 ; 198) de matériau semi-conducteur encapsulé comportant au moins une première partie (4) d'un composant optique réalisée dans le matériau semi-conducteur encapsulé,
- une couche diélectrique (8 ; 154) comportant une couche résiduelle (129) d'oxyde de silicium,
- une seconde couche (16) de matériau semi-conducteur encapsulé comportant au moins une seconde partie (6) d'un composant optique réalisée dans le matériau semi-conducteur encapsulé, cette seconde partie d'un composant optique étant couplée à la première partie d'un composant optique à travers la couche diélectrique par un couplage optique ou capacitif,
**caractérisé en ce que** la puce photonique comporte des plots (50 ; 180) qui s'étendent chacun depuis l'interface entre le substrat et la première couche de matériau semi-conducteur encapsulé, jusqu'à une face enfouie (54 ; 184) située entre :
- l'interface entre la couche diélectrique (8 ; 154) et la première couche (24 ; 198) de matériau semi-conducteur encapsulé, et
- l'interface entre la couche diélectrique (8 ; 154) et la seconde couche (26) en matériau semi-conducteur encapsulé,
la face enfouie de chaque plot étant réalisée dans un matériau différent de l'oxyde de silicium et s'étendant parallèlement à l'interface entre la couche diélectrique (8 ; 154) et la première couche (24 ; 198) de matériau semi-conducteur encapsulé.

## Patentansprüche

1. Verfahren zur Herstellung eines photonischen Chips, wobei dieses Verfahren umfasst:
- das Bereitstellen (80) eines ersten Stapels, umfassend nacheinander einen Träger, eine vergrabene Schicht aus Siliziumoxid und eine Schicht aus Halbleitermaterial, dann
- das Strukturieren (110; 162) der Schicht aus Halbleitermaterial, um mindestens einen ersten Teil einer optischen Komponente in der Schicht aus Halbleitermaterial auszuführen, dann
- das Kapseln (120) der strukturierten Schicht aus Halbleitermaterial in ein dielektrisches Kapselungsmaterial, um eine Schicht aus Halbleitermaterial, das in ein dielektrisches Material gekapselt ist, zu erhalten, dann
- das Kleben (124) eines Substrats auf die Schicht aus gekapseltem Halbleitermaterial, dann
- das Entfernen (126) des Trägers, um die vergrabene Schicht freizulegen, dann
- das Verdünnen (128; 164) der vergrabenen Schicht, um eine Restschicht aus Siliziumoxid auf der Schicht aus gekapseltem Halbleitermaterial auf der Seite, auf welcher der Träger entfernt worden ist, fortbestehen zu lassen, dann
- das Ausführen (130) eines zweiten Teils einer optischen Komponente auf der Restschicht aus Siliziumoxid, wobei dieser zweite Teil einer optischen Komponente mit dem ersten Teil einer optischen Komponente durch die Restschicht aus Siliziumoxid hindurch durch eine optische oder kapazitive Kopplung gekoppelt ist,
**dadurch gekennzeichnet, dass**:
- das Verfahren vor dem Kleben des Substrats das Ausführen (91; 160) von in die vergrabene Schicht versenkten Pads umfasst, wobei jedes dieser Pads eine eingegrabene Seite umfasst, die sich parallel zu der Grenzfläche zwischen der vergrabenen Schicht und der Schicht aus Halbleitermaterial in einer vorbestimmten Tiefe in der vergrabenen Schicht erstreckt, wobei jede der eingegrabenen Seiten aus einem Material ausgeführt ist, das von dem Siliziumoxid der vergrabenen Schicht verschieden ist, und
- das Verdünnen (128; 164) der vergrabenen Schicht einen Vorgang des Verdünnens der vergrabenen Schicht mit Stoppen dieses Verdünnens, sobald die eingegrabene Seite der Pads freigelegt ist, umfasst.

2. Verfahren nach Anspruch 1, wobei das Ausführen der versenkten Pads, vor dem Strukturieren der Schicht aus Halbleitermaterial, umfasst:
- an der Stelle jedes Pads das Ausführen (92) einer Kavität, welche die Schicht aus Halbleitermaterial durchquert und deren Boden sich parallel zu der Grenzfläche zwischen der vergrabenen Schicht und der Schicht aus Halbleitermaterial in der vorbestimmten Tiefe in der vergrabenen Schicht erstreckt, dann
- das Oxidieren (170) der Schicht aus Halbleitermaterial, um eine thermische Oxidschicht zu erhalten, welche die Schicht aus Halbleitermaterial bedeckt, dann
- das Füllen (174) jeder Kavität mit einem Füllmaterial, das von dem Siliziumoxid der vergrabenen Schicht verschieden ist, dann
- das Polieren, mit Stoppen auf der thermischen Oxidschicht, der Seite, von der aus die Kavitäten mit dem Füllmaterial gefüllt worden sind, um das außerhalb dieser Kavitäten gelegene Füllmaterial zu beseitigen.

3. Verfahren nach Anspruch 2, wobei:
- das Strukturieren der Schicht aus Halbleitermaterial umfasst:
- das Abscheiden (192) einer Maskierungsschicht, welche die ausgeführten versenkten Pads und die Gesamtheit der Schicht aus Halbleitermaterial bedeckt, wobei diese Maskierungsschicht aus einem Material ausgeführt ist, das von dem Halbleitermaterial verschieden ist, dann
- das Ätzen (112) der Maskierungsschicht und des thermischen Siliziumoxids an den Stellen, an denen die Schicht aus Halbleitermaterial entfernt werden muss, um eine Ätzmaske zu erhalten, dann
- das Ätzen (114) der Schicht aus Halbleitermaterial durch die erhaltene Ätzmaske hindurch, wobei dieses Ätzen Vertiefungen in der Schicht aus Halbleitermaterial an den Stellen bildet, an denen das Halbleitermaterial geätzt wird,
- das Kapseln (120) der Schicht aus Halbleitermaterial umfasst:
- das Füllen der Vertiefungen mit dem dielektrischen Kapselungsmaterial, dann
- das Polieren, mit Stoppen auf der Maskierungsschicht, der Seite, von der aus die Vertiefungen mit dem dielektrischen Kapselungsmaterial gefüllt worden sind, um das außerhalb dieser Kavitäten gelegene dielektrische Kapselungsmaterial zu beseitigen.

4. Verfahren nach Anspruch 1, wobei:
- das Ausführen (91) der versenkten Pads, vor dem Strukturieren der Schicht aus Halbleitermaterial, umfasst:
- an der Stelle jedes Pads das Ausführen (92) einer Kavität, welche die Schicht aus Halbleitermaterial durchquert und deren Boden sich parallel zu der Grenzfläche zwischen der vergrabenen Schicht und der Schicht aus Halbleitermaterial in der vorbestimmten Tiefe in der vergrabenen Schicht erstreckt, dann
- das Abscheiden (100) einer Maskierungsschicht, welche die Gesamtheit der Schicht aus Halbleitermaterial sowie den Boden jeder Kavität bedeckt, wobei diese Maskierungsschicht aus einem Material ausgeführt ist, das von dem Siliziumoxid der vergrabenen Schicht verschieden ist und von Silizium verschieden ist,
- das Füllen (104) jeder Kavität mit einem Füllmaterial, das von dem Halbleitermaterial verschieden ist, dann
- das Strukturieren (110) der Schicht aus Halbleitermaterial umfasst:
- das Ätzen (112) der Maskierungsschicht an den Stellen, an denen die Schicht aus Halbleitermaterial entfernt werden muss, um eine Ätzmaske zu erhalten, dann
- das Ätzen (114) der Schicht aus Halbleitermaterial durch die erhaltene Ätzmaske hindurch, wobei dieses Ätzen Vertiefungen in der Schicht aus Halbleitermaterial an den Stellen bildet, an denen das Halbleitermaterial geätzt wird.

5. Verfahren nach Anspruch 4, wobei die Dicke der Maskierungsschicht größer als die vorbestimmte Tiefe ist.

6. Verfahren nach Anspruch 4 oder 5, wobei:
- die erhaltene Ätzmaske mindestens zehn Prozent der Oberfläche der Schicht aus Halbleitermaterial bedeckt, bevor sie geätzt wird, und
- das Kapseln (120) der Schicht aus Halbleitermaterial umfasst:
- das Füllen der Vertiefungen mit dem dielektrischen Kapselungsmaterial, dann
- das Polieren, mit Stoppen auf der Maskierungsschicht, der Seite, von der aus die Vertiefungen mit dem dielektrischen Kapselungsmaterial gefüllt worden sind, um das außerhalb dieser Kavitäten gelegene dielektrische Kapselungsmaterial zu beseitigen.

7. Verfahren nach einem der vorhergehenden Ansprüche, wobei die vorbestimmte Tiefe weniger als 150 nm oder 100 nm beträgt.

8. Verfahren nach einem der vorhergehenden Ansprüche, wobei, die Summe der Oberflächen der eingegrabenen Seiten mehr als 10 % der Oberfläche der vergrabenen Schicht beträgt.

9. Verfahren nach einem der vorhergehenden Ansprüche, wobei das Halbleitermaterial monokristallines Silizium ist.

10. Verfahren nach einem der vorhergehenden Ansprüche, wobei beim Kapseln (120) der Schicht aus Halbleitermaterial das dielektrische Kapselungsmaterial, das zum Kapseln des Halbleitermaterials verwendet wird, ein Siliziumoxid ist.

11. Photonischer Chip, der mit einem Herstellungsverfahren nach einem der vorhergehenden Ansprüche erhalten wird, wobei der photonische Chip übereinandergestapelt nacheinander umfasst:
- ein Substrat (18),
- eine erste Schicht (24; 198) aus gekapseltem Halbleitermaterial, umfassend mindestens einen ersten Teil (4) einer optischen Komponente, der aus dem gekapselten Halbleitermaterial ausgeführt ist,
- eine dielektrische Schicht (8; 154), umfassend eine Restschicht (129) aus Siliziumoxid,
- eine zweite Schicht (16) aus gekapseltem Halbleitermaterial, umfassend mindestens einen zweiten Teil (6) einer optischen Komponente, der aus dem gekapselten Halbleitermaterial ausgeführt ist, wobei dieser zweite Teil einer optischen Komponente mit dem ersten Teil einer optischen Komponente durch die dielektrische Schicht hindurch durch eine optische oder kapazitive Kopplung gekoppelt ist,
**dadurch gekennzeichnet, dass** der photonische Chip Pads (50; 180) umfasst, die sich jeweils von der Grenzfläche zwischen dem Substrat und der ersten Schicht aus gekapseltem Halbleitermaterial aus bis zu einer eingegrabenen Seite (54; 184) erstrecken, die gelegen ist zwischen:
- der Grenzfläche zwischen der dielektrischen Schicht (8; 154) und der ersten Schicht (24; 198) aus gekapseltem Halbleitermaterial, und
- der Grenzfläche zwischen der dielektrischen Schicht (8; 154) und der zweiten Schicht (26) aus gekapseltem Halbleitermaterial,
wobei die eingegrabene Seite jedes Pads aus einem Material ausgeführt ist, das von dem Siliziumoxid verschieden ist, und sich parallel zu der Grenzfläche zwischen der dielektrischen Schicht (8; 154) und der ersten Schicht (24; 198) aus gekapseltem Halbleitermaterial erstreckt.

## Claims

1. Method for manufacturing a photonic chip, this method comprising:
- providing (80) a first stack successively comprising a support, a buried silicon oxide layer and a semiconductor material layer, then
- structuring (110; 162) the semiconductor material layer to form at least a first part of an optical component in the semiconductor material layer, then
- encapsulating (120) the structured semiconductor material layer in a dielectric encapsulation material to obtain a semiconductor material layer encapsulated in a dielectric material, then
- bonding (124) a substrate to the encapsulated semiconductor material layer, then
- removing (126) the support to expose the buried layer, then
- thinning (128; 164) the buried layer to leave a residual silicon oxide layer on the encapsulated semiconductor material layer on the side where the support was removed, then
- forming (130) a second part of an optical component on the residual silicon oxide layer, this second part of an optical component being coupled to the first part of an optical component through the residual silicon oxide layer via optical or capacitive coupling,
**characterized in that**:
- prior to the bonding of the substrate, the method comprises forming (91; 160) studs pressed into the buried layer, each of these studs comprising a buried face which extends parallel to the interface between the buried layer and the semiconductor material layer to a predetermined depth within the buried layer, each of the buried faces being formed of a material different from the silicon oxide of the buried layer, and
- the thinning (128; 164) of the buried layer comprises an operation of thinning the buried layer, with this thinning stopping as soon as the buried face of the studs is exposed.

2. Method according to Claim 1, wherein the forming of the pressed-in studs comprises, prior to the structuring of the semiconductor material layer:
- at the location of each stud, forming (92) a cavity which passes through the semiconductor material layer and the bottom of which extends parallel to the interface between the buried layer and the semiconductor material layer to the predetermined depth within the buried layer, then
- oxidizing (170) the semiconductor material layer to obtain a thermal oxide layer which covers the semiconductor material layer, then
- filling (174) each cavity with a filling material different from the silicon oxide of the buried layer, then
- polishing, stopping on the thermal oxide layer, the face from which the cavities were filled with the filling material to dispose of the filling material located outside these cavities.

3. Method according to Claim 2, wherein:
- the structuring of the semiconductor material layer comprises:
- depositing (192) a masking layer which covers the pressed-in studs formed and the entirety of the semiconductor material layer, this masking layer being formed of a material different from the semiconductor material, then
- etching (112) the masking layer and thermal silicon oxide layer at the locations where the semiconductor material layer is to be removed to obtain an etching mask, then
- etching (114) the semiconductor material layer through the etching mask obtained, said etching forming recesses in the semiconductor material layer at the locations where the semiconductor material is etched,
- the encapsulation (120) of the semiconductor material layer comprises:
- filling the recesses with the dielectric encapsulation material, then
- polishing, stopping on the masking layer, the face from which the recesses were filled with the dielectric encapsulation material to dispose of the dielectric encapsulation material located outside these recesses.

4. Method according to Claim 1, wherein:
- the forming (91) of the pressed-in studs comprises, prior to the structuring of the semiconductor material layer:
- at the location of each stud, forming (92) a cavity which passes through the semiconductor material layer and the bottom of which extends parallel to the interface between the buried layer and the semiconductor material layer to the predetermined depth within the buried layer, then
- depositing (100) a masking layer which covers the entirety of the semiconductor material layer and the bottom of each cavity, this masking layer being formed of a material different from the silicon oxide of the buried layer and different from silicon,
- filling (104) each cavity with a filling material different from the semiconductor material, then
- the structuring (110) of the semiconductor material layer comprises:
- etching (112) the masking layer at the locations where the semiconductor material layer is to be removed to obtain an etching mask, then
- etching (114) the semiconductor material layer through the etching mask obtained, said etching forming recesses in the semiconductor material layer at the locations where the semiconductor material is etched.

5. Method according to Claim 4, wherein the thickness of the masking layer is greater than the predetermined depth.

6. Method according to Claim 4 or 5, wherein:
- the etching mask obtained covers at least ten percent of the surface area of the semiconductor material layer before the latter is etched, and
- the encapsulation (120) of the semiconductor material layer comprises:
- filling the recesses with the dielectric encapsulation material, then
- polishing, stopping on the masking layer, the face from which the recesses were filled with the dielectric encapsulation material to dispose of the dielectric encapsulation material located outside these recesses.

7. Method according to any one of the preceding claims, wherein the predetermined depth is less than 150 nm or 100 nm.

8. Method according to any one of the preceding claims, wherein the cumulative sum of the surface areas of the buried faces is greater than 10% of the surface area of the buried layer.

9. Method according to any one of the preceding claims, wherein the semiconductor material is monocrystalline silicon.

10. Method according to any one of the preceding claims, wherein, when encapsulating (120) the semiconductor material layer, the dielectric encapsulation material used to encapsulate the semiconductor material is a silicon oxide.

11. Photonic chip obtained by a manufacturing method according to any one of the preceding claims, wherein the photonic chip comprises, successively stacked one on top of the other:
- a substrate (18),
- a first layer (24; 198) of encapsulated semiconductor material comprising at least a first part (4) of an optical component formed in the encapsulated semiconductor material,
- a dielectric layer (8; 154) comprising a residual layer (129) of silicon oxide,
- a second layer (16) of encapsulated semiconductor material comprising at least a second part (6) of an optical component formed in the encapsulated semiconductor material, this second part of an optical component being coupled to the first part of an optical component through the dielectric layer via optical or capacitive coupling,
**characterized in that** the photonic chip comprises studs (50; 180) which each extend from the interface between the substrate and the first encapsulated semiconductor material layer to a buried face (54; 184) located between:
- the interface between the dielectric layer (8; 154) and the first encapsulated semiconductor material layer (24; 198), and
- the interface between the dielectric layer (8; 154) and the second encapsulated semiconductor material layer (26),
the buried face of each stud being formed of a material different from silicon oxide and extending parallel to the interface between the dielectric layer (8; 154) and the first encapsulated semiconductor material layer (24; 198).
